# EUROPEAN PATENT APPLICATION

(11) **EP 1 314 896 A2**
(43) Date of publication of application: **28.05.2003**
(21) Application number: 02020392.3
(22) Date of filing: 12.09.2002
(51) Int. Cl.: F15B 1/26, F16K 1/30

(54) **Reservoir having a ventilating structure**

(30) Priority: 14.09.2001 JP 2001279037
(71) Applicant: TOYODA KOKI KABUSHIKI KAISHA, Kariya-shi Aichi-ken (JP)
(72) Inventor: Hirao, Naoyuki, Kariya-shi, Aichi-ken (JP)
(74) Representative: Leson, Thomas Johannes Alois, Dipl.-Ing.

(57) **Abstract**

The reservoir includes a tank (1) having an inlet (2), and a cap for covering the inlet. The cap further comprises an outer portion (3), an inner portion (4), a labyrinth (5), a protruding portion (8), a vent hole and a check valve (20). The inner portion (4) is arranged in the outer portion (3) to define the labyrinth (5) therebetween. The labyrinth (5) is opened to outside of the tank (1). The protruding portion (8) is formed on the center of the inner portion (4) to protrude in a direction of the inside of the tank (1), in which the vent hole (9) is formed to communicate between inside of the tank (1) and the labyrinth (5). The check valve (20) is arranged on an upper end of the vent hole (9), and is constructed to permit the communication of air through the vent hole (9) and to prevent a leak of the fluid through the vent hole (9).

## Description

### INCORPORATION BY REFERENCE

The present application claims priority under 35 U.S.C. §119 to Japanese Patent Application No. 2001-279037, filed on September 14, 2001. The contents of that application are incorporated herein by reference in their entirety.

### BACKGROUND OF THE INVENTION

### 1. Field of the Invention

This invention relates to a reservoir which is used for reserving fluid such as operating oil for a power steering system, more particularly to a reservoir having a ventilating structure which permits ventilation between the inside and the outside of the reservoir.

### 2. Discussion of the background

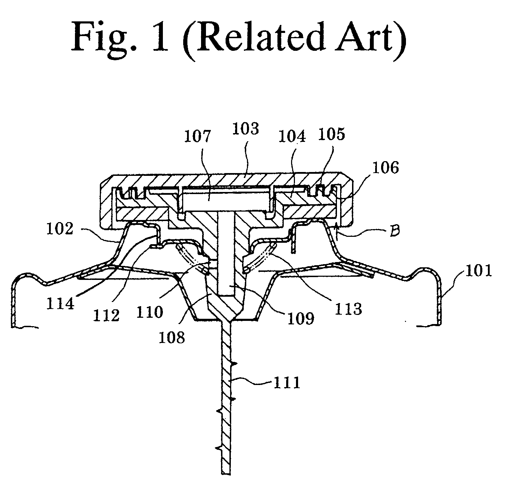

A reservoir is built in a hydraulic apparatus such as a power steering system in order to accommodate to volume changes of operating fluid that occur due to temperature variations of the operating fluid. Fig. 1 shows a conventional reservoir. A tank 101 made of metal or synthetic resin has an outflow passage and an inflow passage (not shown) at the bottom thereof and an inlet 102 at the top thereof. A cap made of synthetic resin has a ventilating structure and is detachably attached to the tank 101 to cover the inlet 102. The cap consist of an outer portion 103, an inner portion 104 which is arranged, relative to the outer portion, to provide a labyrinth 105 (vent gap) therebetween, and a protruding portion 108 which is formed to protrude from a center portion of the inner portion 104 in a direction toward the inside of the tank 101. A vent hole 109 connected to the labyrinth 105 and a small hole 110 communicating the vent hole 109 with the inside of tank 101 is formed in the protruding portion 108. A clearance 106 formed between an inner surface of the outer portion 103 and a peripheral surface of the inner portion 104, and a chamber 107 formed in a center of the inner portion 103, function as a breather B which connects the inside and the outside of the tank 101. A level-gauge 111 is integrally formed with the lower portion of the protruding portion 108. The cap is attached to the tank 101 by engagement hooks 112 which are mounted on the protruding portion 108, and which are biased upwardly by a lock-spring 113 to engage a stopper 114 which is formed at an edge of the inlet 102.

The aforementioned reservoir has a problem in that the operation fluid leaks from the tank 101 through the small hole 110, the vent hole 109 and the labyrinth 105 when the tank 101 is shaken while driving on rough roads and the operation fluid is splashed. It is especially remarkable when the volume of the operation fluid is increased by high temperature and its level has risen.

### SUMMARY OF THE INVENTION

In view of the foregoing, it is an object of the present invention to provide an improved reservoir. In order to achieve the above and other objects, the present invention provides a reservoir that comprises a tank having an inlet, and a cap for covering the inlet. The cap further comprises an outer portion, an inner portion, a labyrinth, a protruding portion, a vent hole and a check valve. The inner portion is arranged in the outer portion to define the labyrinth therebetween. The labyrinth is opened to the exterior of the tank. The protruding portion is formed on the center of the inner portion to protrude a direction of the inside of the tank, wherein the vent hole is formed to communicate between inside of the tank and the labyrinth. The check valve is arranged on an upper end of the vent hole, and constructed to permit the communication of air through the vent hole and to prevent a leak of the fluid through the vent hole. Furthermore, the check valve is made of an elastic material and comprises a valve-sheet, a boss, a flange, a through hole and a valve portion. The valve-sheet has a center hole and is attached on the inner portion. The boss is inserted in the center hole of the valve-sheet. The flange is formed at an upper end of the boss and blocks a clearance between the boss and the center hole of the valve-sheet. The through hole is formed in the boss. The valve portion is formed at a lower end of the boss to elastically close a lower end of the though hole. Therefore, the flange is elastically deformed to permit the air in the tank to flow out when the pressure in the tank is higher than the pressure outside of the tank, and the valve portion is elastically deformed to permit the air outside of the tank to flow in when the pressure in the tank is lower than the pressure outside of the tank. However, leakage of the operation fluid is prevented by the flange and the valve portion.

### BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:
Fig. 1 is a cross section view of a conventional reservoir;
Fig. 2 is a cross section view of a reservoir according to a first embodiment of the present invention;
Fig. 3 is a cross-sectional view enlarged a part of Fig.2;
Fig. 4 is a cross-sectional view enlarged a part of a reservoir according to the second embodiment of the present invention;
Fig. 5 is a cross-sectional view taken along line *5-5* in Fig. 4.

### DESCRIPTION OF THE PREFERRED EMBODIMENTS

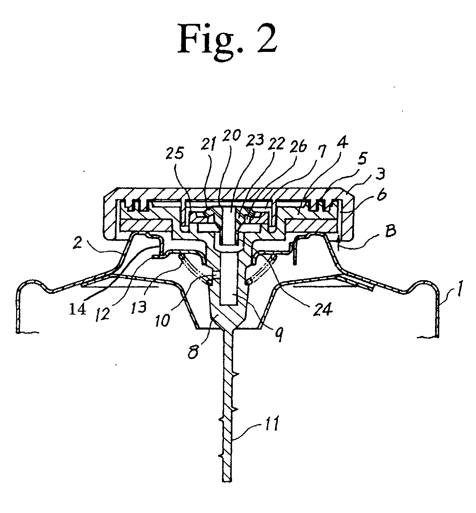

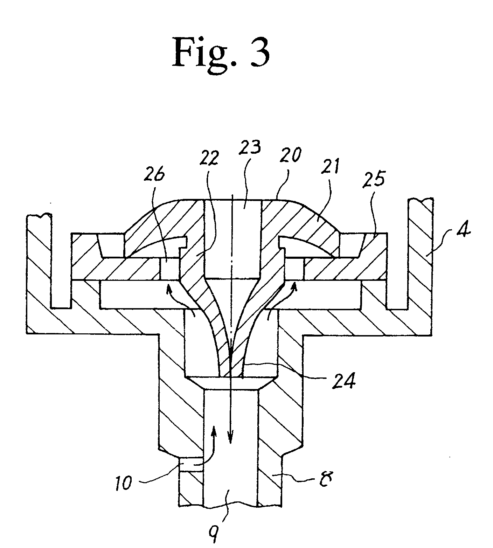

Embodiments of the present invention will be described with reference to the drawings. Fig. 2 and Fig. 3 show a reservoir according to the first embodiment of the present invention. A tank 1 that reserves operation fluid is made of metal or synthetic resin. An outflow passage and an inflow passage (not shown) which are connected to a hydraulic apparatus such as a power steering apparatus are formed at the bottom of the tank 1. As shown in Fig. 2, an inlet 2 for filling operation fluid is formed at the top of the tank 1, and a cap having a ventilating structure is detachably attached thereon. The cap that has a ventilating structure comprises an outer portion 3, an inner portion 4, a protruding portion 8 and a check valve 20. The inner portion 4 is formed to define a chamber 7 at the inside center thereof. The outer portion 3 and the inner portion 4 are arranged to provide a labyrinth 5 (vent gap) therebetween. A clearance 6 is provided between an inner surface of the outer portion 3 and a peripheral surface of the inner portion 4. The protruding portion 8 is formed at the center of the inner portion 4 to protrude in the direction of the inside of the tank 1. A vent hole 9 that is communicated with the labyrinth 5 is formed in the protruding portion 8. A small hole 10 that communicates the vent hole 9 with the inside of the tank 1 is horizontally opened at side portion of the protruding portion 8. A level-gauge 11 for gauging a level of the operation fluid is integrally formed with the lower portion of the protruding portion 8.

According to aforementioned construction, the clearance 6 and the chamber 7 function as a breather B' that permits communication between the inside of the tank 1 and the outside (atmospheric air). Two hooks 12 having an 180 degree phase difference with each other are mounted to the protruding portion 8 so as to be able to slide vertically thereon, but to be unable to turn on the protruding portion 8. The hooks 12 are biased upwardly by a lock-spring 13 that is arranged between the hooks 12 and a shoulder of the protruding portion 8. A stopper 14 is formed at an edge of the inlet 2. Two notches (not shown) which have a 180 degree phase difference are formed at the stopper, so that the hooks 12 are able to engage the stopper 14. When the cap is inserted into the inlet 2 in a state that the phase of the hooks 12 agrees with the phase of notches, and is turned, the cap is secured to the tank 1 by engaging the hooks 12 with the stopper 14.

The check valve 20 will be described hereinafter. The check valve 20 is disposed in the chamber 7 to permit ventilation between the inside and the outside of the tank 1, and to prevent leaks of the operation fluid to the outside of the tank 1. As shown in Fig. 3, the check valve 20 which is made of an elastic material such as rubber or soft-synthetic resin is disposed on the inner portion 4 to close the upper end of the vent hole 9. The check valve 20 consists of a flange 21, a boss 22, a through hole 23, a valve portion 24 and a valve-sheet 25. The valve-sheet 25 is fixed on the inner portion 4 by being glued at the periphery of the bottom surface thereof. The boss 22 is inserted into a center hole 26 formed on the valve-sheet 25 so that the flange 21 closes a clearance between the boss 22 and the center hole 26. Although the flange 21 prevents communication between the vent hole 9 and the chamber 7, when the pressure in the tank 1 is higher than the pressure outside of the tank 1 (atmospheric pressure) the flange 21 is elastically deformed upwardly and permits air in the tank 1 to flow out. On the other hand, the valve portion 24 is formed so that the lower end of the through hole 23 is closed by its elasticity. Therefore, the valve portion 24 prevents communication between the vent hole 9 and the through hole 23. However, when the pressure in the tank 1 is lower than the pressure outside of the tank 1 (atmosphere pressure), the lower end of the valve portion 24 is elastically deformed and permits the air outside of the tank 1 to flow into the tank 1.

Since the check valve 20 has the aforementioned structure, the air outside of the tank 1 can flow into the tank 1 through the labyrinth 5, the chamber 7, the check valve 20, the vent hole 9 and the small hole 10 because the valve portion 24 is deformed by the pressure of the air, and the air in the tank 1 can flow out through the small hole 10, the vent hole 9, the center hole 26, the chamber 7 and the labyrinth 5 because the flange 21 is deformed by the pressure of the air. Further, in a case that the operation fluid splashed by vibration flows into the vent hole 9 through the small hole 10, the operation fluid does not leak to the outside of the tank 1 because of the existence of the check valve 20, i.e., the lower portion of the check valve 20 is closed by the valve portion 24, and the center hole 26 of the valve-sheet 25 is closed by the flange 21. The flange 21 will not be deformed by the splashed fluid.

Furthermore, the check valve 20 is assembled to the cap so that the valve-sheet 25, in which the boss 22 of the check valve 20 is inserted in the center hole 26 thereof, is fixed on the inner portion 4. According to such an assembling method, inconsistency caused during the assembly of the check valves 20 is significantly reduced. Therefore, the quality of the check valves 20, i.e., valve opening pressure at the flanges 21, becomes consistent.

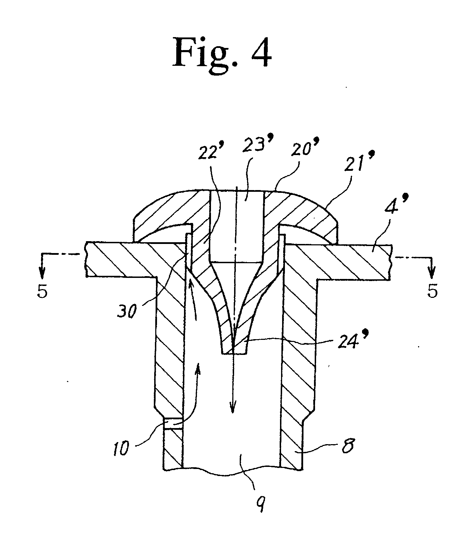

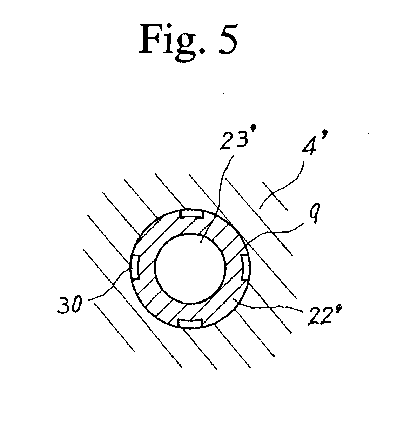

The second embodiment of the present invention will be described with reference to Fig. 4 and Fig. 5. Since constructions of an inner portion 4' and a check valve 20' of the second embodiment are different to the constructions of the first embodiment, these are described hereinafter and descriptions of other portions which are the same as the first embodiment are omitted.

The form of an inner portion 4' of the second embodiments is the same as the form of the inner portion 104 of the aforementioned related art, but with a check valve 20' installed therein. Basically, the construction of the check valve 20' is the same as that of the check valve 20 of the first embodiment. As shown in Fig. 4, the check valve 20' is made of an elastic material such as rubber or soft-synthetic resin and consists of a flange 21', a boss 22', a through hole 23'and a valve portion 24', and in this embodiment further comprises a plurality grooves 30. The boss 22' is inserted into the vent hole 9 so that the flange 21' closes the upper end of the vent hole 9. The plurality grooves 30 are formed on a peripheral surface of the boss 22' that contacts an inner surface of the vent hole 9 in order to communicate the vent hole 9 with the chamber 7. Although the flange 21' prevents communication between the vent hole 9 and the labyrinth 5, when the pressure in the tank 1 is higher than the pressure outside of the tank 1 (atmospheric pressure) the flange 21' is elastically deformed and permits air in the tank 1 to flow out. On the other hand, the valve portion 24' is formed so that the lower end of the through hole 23' is closed by its elasticity to prevent communication between the vent hole 9 and the labyrinth 5. However, when the pressure in the tank 1 is lower than the pressure outside of the tank 1 (atmospheric pressure), the valve portion 24' is elastically deformed and permits the air outside of the tank 1 to flow into the tank 1.

The reservoir of the second embodiment also achieves the effect that the air outside of the tank 1 can flow into the tank 1 through the labyrinth 5, the chamber 7, the check valve 20', the vent hole 9 and the small hole 10 so that the valve portion 24' is deformed by pressure of the air, and the air in the tank 1 can flow out through the small hole 10, the vent hole 9, the grooves 30, the chamber 7 and the labyrinth 5 so that the flange 21' is deformed by pressure of the air. Further, in a case that the operation fluid splashed by vibrations flows into the vent hole 9 through the small hole 10, the operation fluid does not leak to the outside of the tank 1 because of the existence of the check valve 20, i.e., the lower portion of the check valve 20' is closed by the valve portion 24', and the upper end of the vent hole 9 is closed by the flange 21'. The flange 21' will not be deformed by the splashed fluid. In addition, since the valve-sheet 25 of the first embodiment isn't necessary, the reservoir of the present invention can be achieved by installing the check valve 20' in a conventional reservoir.

Although the reservoir of the present invention is described as provided for a power steering apparatus, the present invention is not so limited and can be adapted to other reservoirs such as a reservoir for clutch oil of a clutch apparatus or for brake oil of a brake apparatus.

Obviously, numerous modifications and variations of the present invention are possible in light of the above teachings. It is thereby to be understood that within the scope of the appended claims, the present invention may be practiced otherwise than as specifically described herein.

The reservoir includes a tank having an inlet, and a cap for covering the inlet. The cap further comprises an outer portion, an inner portion, a labyrinth, a protruding portion, a vent hole and a check valve. The inner portion is arranged in the outer portion to define the labyrinth therebetween. The labyrinth is opened to outside of the tank. The protruding portion is formed on the center of the inner portion to protrude in a direction of the inside of the tank, in which the vent hole is formed to communicate between inside of the tank and the labyrinth. The check valve is arranged on an upper end of the vent hole, and is constructed to permit the communication of air through the vent hole and to prevent a leak of the fluid through the vent hole.

## Claims

1. A reservoir for reserving fluid, comprising:
a tank having an inlet; and
a cap for covering the inlet, wherein the cap comprises;
an outer portion,
an inner portion arranged in the outer portion,
a labyrinth defined by at least one of the outer portion and the inner portion, and opened to outside of the tank,
a protruding portion formed at a center of the inner portion and arranged to protrude in a direction toward the inside of the tank when the cap covers the inlet,
a vent hole formed in the protruding portion to communicate between the inside of the tank and the labyrinth, and
a check valve arranged on an upper end of the vent hole, and constructed to permit communication of air through the vent hole and to prevent a leak of the fluid through the vent hole.

2. A reservoir for reserving fluid according to claim 1, wherein the check valve is made of an elastic material.

3. A reservoir for reserving fluid according to claim 2, wherein the check valve comprises:
a valve-sheet having a center hole therein and attached on the inner portion;
a boss inserted in the center hole of the valve-sheet;
a flange formed at an upper end of the boss and closing a clearance between the boss and the center hole of the valve-sheet;
a through hole formed in the boss; and
a valve portion formed at a lower end of the boss to elastically close a lower end of the though hole.

4. A reservoir for reserving fluid according to claim 3, wherein
the flange is adapted to elastically deform to permit air in the tank to flow out when a pressure in the tank is higher than a pressure outside of the tank; and
the valve portion is adapted to elastically deform to permit air outside of the tank to flow in when the pressure in the tank is lower than the pressure outside of the tank.

5. A reservoir for reserving fluid according to claim 2, wherein the check valve comprises:
a boss inserted in the vent hole,
a plural number of grooves formed on a periphery of the boss;
a flange formed at an upper end of the boss and closing an upper end of the vent hole;
a through hole formed in the boss; and
a valve portion formed at a lower end of the boss to elastically close a lower end of the though hole.

6. A reservoir for reserving fluid according to claim 5, wherein
the flange is adapted to elastically deform to permit the air in the tank to flow out when a pressure in the tank is higher than a pressure outside of the tank; and
the valve portion is adapted to elastically deform to permit air outside of the tank to flow in when the pressure in the tank is lower than the pressure outside of the tank.

7. A reservoir for reserving fluid, comprising:
a tank having an inlet; and
a cap for covering the inlet, wherein the cap comprises;
an outer portion,
an inner portion arranged in the outer portion,
a labyrinth defined by at least one of the outer portion and the inner portion, and opened to outside of the tank,
vent means for communicating between the inside of the tank and the labyrinth, and
check valve means for permitting the communication of air through the vent means and preventing leakage of the fluid through the vent means.

8. A vehicle having a reservoir for reserving fluid, comprising:
a tank reserving a fluid to be supplied to the vehicle, the tank having an inlet; and
a cap for covering the inlet, wherein the cap comprises a vent hole, and check valve means for permitting communication of air through the vent hole and for preventing a leak of the fluid through the vent hole to outside of the tank.
